(19) Europäisches Patentamt / European Patent Office / Office européen des brevets

(11) **EP 3 949 263 B1**

(12) **EUROPÄISCHE PATENTSCHRIFT**

(45) Veröffentlichungstag und Bekanntmachung des Hinweises auf die Patenterteilung:
**02.07.2025  Patentblatt 2025/27**

(21) Anmeldenummer: **20715325.5**

(22) Anmeldetag: **26.03.2020**

(51) Internationale Patentklassifikation (IPC):
*H04L 9/32* (2006.01)     *H04L 9/12* (2006.01)
*H04L 9/40* (2022.01)     *H04L 12/40* (2006.01)

(52) Gemeinsame Patentklassifikation (CPC):
**H04L 63/123; H04L 9/12; H04L 9/3242;**
**H04L 12/40; H04L 63/1466;** H04L 2012/40215;
H04L 2209/84

(86) Internationale Anmeldenummer:
**PCT/EP2020/058542**

(87) Internationale Veröffentlichungsnummer:
**WO 2020/201010 (08.10.2020 Gazette 2020/41)**

(54) **VORRICHTUNGEN UND VERFAHREN ZUM ERZEUGEN UND ZUR AUTHENTISIERUNGSPRÜFUNG MINDESTENS EINES IN EINEM BUS-SYSTEM (BU) INSBESONDERE EINES KRAFTFAHRZEUGS ZU ÜBERTRAGENDEN DATENPAKETS**

DEVICES AND METHODS FOR THE GENERATING AND AUTHENTICATION OF AT LEAST ONE DATA PACKET TO BE TRANSMITTED IN A BUS SYSTEM (BU), IN PARTICULAR OF A MOTOR VEHICLE

DISPOSITIFS ET PROCÉDÉ POUR LA GÉNÉRATION ET LA VÉRIFICATION D'AUTHENTIFICATION D'AU MOINS UN PAQUET DE DONNÉES À TRANSMETTRE DANS UN SYSTÈME DE BUS (BU) EN PARTICULIER D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2019  DE 102019204608**

(43) Veröffentlichungstag der Anmeldung:
**09.02.2022  Patentblatt 2022/06**

(73) Patentinhaber: **Conti Temic microelectronic GmbH**
**90411 Nürnberg (DE)**

(72) Erfinder:
• **SCHULTER, Wolfgang**
**81739 München (DE)**
• **SCHREMPP, Wolfgang**
**81739 München (DE)**

(74) Vertreter: **Continental Corporation c/o Continental Automotive GmbH Intellectual Property Postfach 83 01 16 81701 München (DE)**

(56) Entgegenhaltungen:
EP-A1- 3 432 511          DE-A1- 102014 113 111
DE-A1- 102015 015 361     DE-A1- 102017 125 826

EP 3 949 263 B1

**Beschreibung**

Die Erfindung betrifft Vorrichtungen und Verfahren zum (senderseitigen) Erzeugen und zur (empfängerseitigen) Authentisierungsprüfung mindestens eines in einem Bus-System (BU) insbesondere eines Kraftfahrzeugs zu übertragenden Datenpakets.

DE 10 2017 125826 A1, EP 3 432 511 A1, DE 10 2014 113111 A1 und DE 10 2015 015361 A1 offenbaren Verschlüsselungssysteme.

Folgende Veröffentlichungen betreffen eine gesicherte Übertragung von Nachrichten:

[1] W. Zimmermann, R. Schmidgal Bussysteme in der Fahrzeugtechnik, 4. Auflage, Vieweg + Teubner 2011
[2] AUTOSAR Specification of Secure Onboard Communication,

Release 4.3.1, www.autosar.com [3] Yang, G., Zhu, B., Suder, V., Aagaard, M.D., Gong, G: The SIMECK Family of Block Ciphers, In Cryptographic Hardware and Embedded Systems-CHES 2011 (pp. 342-357). 2015 Springer Berlin Heidelberg. pdf at eprint.iacr.org

Message Authentication Codes "MAC" (hier wird wie in z.B. Wikipedia auch der deutsche Begriff Nachrichtenauthentisierungscode verwendet) können zur Sicherstellung der Integrität einer übertragenen Nachricht verwendet werden, ähnlich einer Checksumme. Im Falle eines verschlüsselten MAC (also CMAC) kann dieser auch empfängerseitig nur bei Kenntnis eines kryptographischen Schlüssels berechnet werden. Ein empfangender Busteilnehmer, der ebenfalls im Besitz dieses Schlüssels ist, kann so den Inhalt einer Nachricht auf Authentizität hin überprüfen. Die Nachricht selbst wird unverschlüsselt zusammen mit einem MAC oder CMAC übertragen.

Eine Aufgabe der Erfindung ist es, effizient eine sichere Kommunikation in einem Bus-System eines Fahrzeugs zu implementieren.

Die Aufgabe wird jeweils durch die Gegenstände der unabhängigen Patentansprüche gelöst, und zwar insbesondere Sender-seitig und Empfänger-seitig, jeweils als Verfahren und Vorrichtung. Ausgestaltungen der Erfindung können effizient eine gesicherte Kommunikation in einem Netzwerk in einem Fahrzeug ermöglichen. Das Verfahren kann z.B. effizient eine Authentisierung eines Replay-festen übertragenen Nachrichtenauthentisierungscodes CMAC im Empfänger eines Datenpakets ermöglichen.

Einige besonders vorteilhafte Ausgestaltungen der Erfindung sind in den Unteransprüchen und der Beschreibung angegeben.

Nach Ausgestaltungen der Erfindung kann der Zählwert z.B. ein mit einem Zähler erzeugter Wert sein, der z.B. die Anzahl bisher über das Bus-System insbesondere seit dem letzten Neustart des Bus-Systems gesendeter und/oder-empfangener Nachrichten repräsentiert (was besonders einfach z.B. in Software implementierbar sein kann), oder ein insbesondere seitens mehrerer oder aller Bus-Teilnehmer zur Verfügung stehender Timerwert mindestens eines Timers (was insbesondere bei seitens mehrerer Bus-Teilnehmer zur Verfügung stehender gleicher Zeit / Timer-Werte die Sicherheit erhöhen kann).

Eine empfängerseitige Authentisierungsprüfung kann nach erfindungsgemäßen Ausgestaltungen insbesondere einen Schwellwert beim Vergleich eines aktuellen Empfangsnachrichtenzählwerts und eines vorhergehenden Empfangsnachrichtenzählwerts verwenden, der vorzugsweise nach einem Neustart des Bus-Systems auf einen höheren Wert gesetzt wird als im sonstigen Normalbetrieb, was situationsabhängig die Sicherheit optimieren kann.

Das Bus-System insbesondere ein CAN-Bus oder ein CAN-FD Bus oder ein LIN-Bus oder ein SPI Bus oder ein Ethernet Bus, oder ein I2C Bus kann für eine Kommunikation zwischen ECUs vorgesehen sein.

Weitere Merkmale und Vorteile einiger vorteilhafter Ausgestaltungen der Erfindung ergeben sich aus der nachfolgenden Beschreibung von Ausführungsbeispielen der Erfindung anhand der Zeichnung. Dabei zeigt beispielhaft zur Veranschaulichung von einigen möglichen Ausgestaltungen der Erfindung, vereinfachend und schematisch:

**Fig. 1** ein Kraftfahrzeug mit einem erfindungsgemäßen Netzwerk in Form eines Bus-Systems mit mehreren Bus-Teilnehmern,
**Fig. 2** einen generell in einem herkömmlichen Bus-System verwendbaren Aufbau eines zu übertragenden Datenpakets, und die Erzeugung von Anteilen des Datenpakets,
**Fig. 3** bei einem herkömmlichen Bus-System mögliche Werte von in vier Datenpaketen jeweils enthaltenen Nachrichten und enthaltenen Nachrichtenauthentisierungscodes, sowie von z.B. in Datenpaketen übertragenen abgeschnittenen Aktualitätswerten,
**Fig. 4** Schritte und Vorrichtungen eines erfindungsgemäßen Ausführungsbeispiels (Sender- und Empfänger- seitig),
**Fig. 5** bei einem erfindungsgemäßen Ausführungsbeispiel beispielhaft Werte von in vier Datenpaketen jeweils enthaltenen Nachrichten und enthaltenen Nachrichtenauthentisierungscodes, sowie von z.B. nicht in Datenpaketen übertragenen Zwischenwerten der Berechnungen.

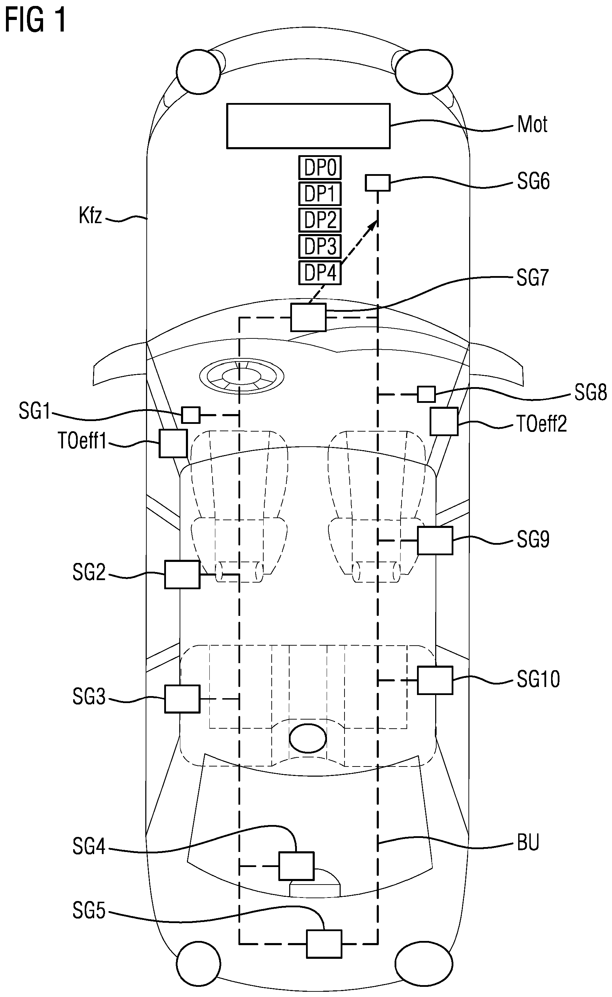

**Fig. 1** zeigt schematisch vereinfachend zu einigen Ausgestaltungen der Erfindung, wie generell in einem Netzwerk (z.B. einem Bus BU, insbesondere einem CAN-Bus und/oder LIN-Bus und/oder anderen Bus-System) in einem Kraftfahrzeug Kfz (z.B. PKW oder LKW) Datenpakete DP1, DP2, DP3, DP4 (z.B. insb. PDUs oder Protocol Data Units oder insb. in einem CAN Bus auch Frames, insbesondere Daten-Frame) von einem die Datenpakete DP1, DP2, DP3, DP4 sendenden Bus-Teilnehmer SG7 an einen die Datenpakete DP1, DP2, DP3, DP4 empfangenden Bus-Teilnehmer SG6 des Bus-Systems BU (mit mehreren Busteilnehmern/ECU SG1 - SG10) übertragen werden, welche Datenpakete DP1, DP2, DP3, DP4 z.B. zur Steuerung eines (mit einem Bus-Teilnehmer verbundenen) Motors Mot oder Türöffners TOeff1, Toeff2 oder zum Übermitteln von Daten eines Sensors dienen können etc.

Der Aufbau von Datenpaketen DP1, DP2, DP3, DP4 ist für ein Beispiel eines Netzwerks in Form eines CAN Bus beispielhaft beschrieben in de.wikipedia.org/wiki/Controller_Area_Network.

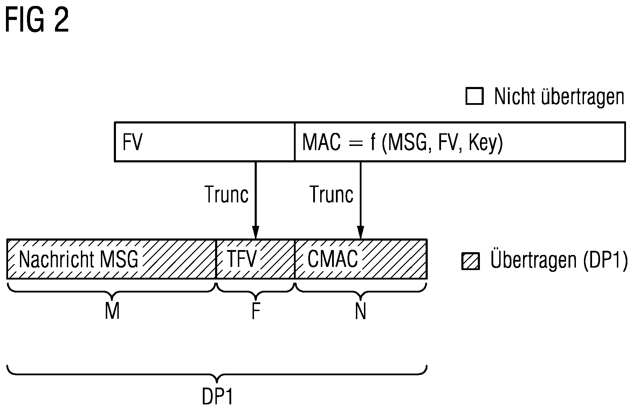

**Fig. 2** veranschaulicht generell und vereinfachend bei einem sendenden Busteilnehmer SG7 eine Verwendung von Nachrichtenauthentisierungscodes (Message Authentication Codes) MAC (verkürzt übertragen als CMAC) zur Sicherstellung der Integrität einer übertragenen Datenpakets DP1, DP2, DP3, z.B. ähnlich einer Checksumme, also zur Ermöglichung der Authentisierungsprüfung der übertragenen Datenpakete DP1, DP2, DP3, DP4 bei deren empfangendem Busteilnehmer SG6.

Ein Nachrichtenauthentisierungscode (Message Authentication Codes) MAC, bekannt z.B. aus de.wikipedia.org/wiki/Message_Authentication_Code ) wird erzeugt aus der Nachricht MSG (also z.B. der zu übertragenen Nutzdaten und/oder des Felds DATA in einem Datenpaket) mit der Länge M Bytes (Byte z.B. umfassend je 8 Bit; M z.B. = 8), und zwar

- mit einem (z.B. symmetrischen) Verschlüsselungsverfahren f (z.B. AES-128) unter Verwendung eines (dem sendenden Busteilnehmer SG7 und dem empfangenden Busteilnehmer SG6 bekannten) geheimen Schlüssels KEY und eines Aktualitätswerts ("Freshness Value") FV (z.B. in Form eines (Nachrichten-)Zählers oder Zeitstempels), also vereinfachend:

$$MAC = f (MSG, FV, Key)$$

Von einem sendenden Busteilnehmer SG7 an einen empfangenden Busteilnehmer SG6 wird z.B. in einem Datenpaket DP1 (oder DP2 oder DP3 oder DP4 oder DP0) übertragen:

- die (Nutzdaten-) Nachricht MSG der Byte-Länge M selbst (z.B. unverschlüsselt),
- sowie ein (auf die Byte-Länge F) abgeschnittener (das Bezugszeichen des Abschneidens ist Trunc) Aktualitätswert ("Freshness Value") FV, nach dem Abschneiden als abgeschnittener Aktualitätswert oder TFV bezeichnet (z.B. unverschlüsselt),
- sowie ein (auf die Byte-Länge N) abgeschnittener (Bezugszeichen Trunc) Nachrichtenauthentisierungscode (Message Authentication Code) MAC (nach diesem Abschneiden als CMAC bezeichnet).

M, F, N sind dabei natürliche Zahlen, z.B. jeweils feste Werte für alle Datenpakete.

Ein (auf die Länge N) abgeschnittener übertragener Nachrichtenauthentisierungscode CMAC kann nicht ohne Kenntnis des kryptographischen Schlüssels Key berechnet werden.

Ein empfangender Busteilnehmer, der ebenfalls im Besitz dieses Schlüssels Key ist, kann mit dem erhaltenen abgeschnittenen Nachrichtenauthentisierungscode CMAC den Inhalt einer Nachricht MSG auf Authentizität hin überprüfen.

Würden Datenpakete DG1, DG2, DG3 mit gleichem Nachrichten- Inhalt MSG wiederholt übertragen werden, ergäbe sich ein ebenfalls immer gleicher Nachrichtenauthentisierungscode MAC und damit auch ein gleicher verkürzter übertragener Nachrichtenauthentisierungscode CMAC.

Um solche Wiederholungen zu vermeiden (Replayangriff) kann die Nachricht einen stets veränderlichen Wert (abgeschnittener Aktualitätswert TFV) beinhalten, etwa einen hinreichend langen Zähler (Zähler der Datenpakete DP1, DP2, DP3), Zeitstempel (des Absendens einer Nachricht) oder Zufallswert FV, bzw. abgeschnitten TFV.

Eine gängige Methode zur Authentisierung ist die Secure Onboard Communication (SecOC), welche in der eingangs genannten Quelle [2] [Autosar] beschrieben ist, und z.B. zur sicheren Echtzeit-Kommunikation im Fahrzeug über CAN dient.

Das Standard SecOC Verfahren nach [2] sieht die ressourceneffiziente Authentisierung von Nachrichten (PDUs) für kritische Daten vor, sowie die Sicherstellung von deren Aktualität zum Schutz vor Replay-Attacken. Dabei wird im Wesentlichen symmetrische Verschlüsselung sowohl bei der sendenden (TX-ECU, in Fig. 1 SG7) als auch bei der empfangenden RX-ECU (in Fig.1 SG-6) verwendet, hier insbesondere der Standard Algorithmus AES-128. Als Kommunikationsmedium ist insbesondere auch der klassische CAN-Bus und die Erweiterung CAN-FD geeignet.

**Fig. 2** zeigt eine schematische Darstellung nach [2] zur Erzeugung einer authentischen Nachricht mittels einer kryptographischen Authenticator Funktion. Um gegen Replay-Attacken robust zu sein, muss der Aktualitätswert (Freshness Value) FV sich bei jedem Senden verändern, auch bei unveränderlicher Nachricht MSG. FV ist daher z.B. häufig ein monotoner Zähler (Counter) mit hinreichend langer Wortlänge, oder ein Zeitstempel, der die mehreren oder allen Bus-Teilnehmern bekannte globale Zeit repräsentiert. In dieser Darstellung wird sowohl der Aktualitätswert (Freshness Value), als auch der berechnete MAC aus Effizienzgründen abschnitten (truncated).

Beim klassischen CAN-Bus mit maximal 8 byte pro Nachricht wird häufig nach Fig. 2 verfahren, etwa mit Längen [M, F, N] = [4, 1, 3], um die maximale Zahl der Datenbytes 8 (eines Datenpakets DP1) nicht zu überschreiten.

Gerade das Abschneiden erfordert dann im empfangenden Busteilnehmer, dass die unverkürzten Aktualitätswerte (Freshness Values) FV, also längere monotone Counter oder Zeitstempel aktuell bzw. synchron zum sendenden Busteilnehmer gehalten werden müssen, was durchaus problematisch sein kann, etwa bei einem Startvorgang (des Bus-Systems). Sollte der CMAC im empfangenden Busteilnehmer ungleich dem übertragenen Wert sein, wird die gesamte Nachricht als nicht authentisch verworfen.

Die alternative Möglichkeit, auf das Abschneiden (truncation) ganz zu verzichten vermeidet zwar Probleme mit der Synchronität, dies erfordert jedoch eine höhere Bandbreite oder Übertragungszeit auf dem Bus.

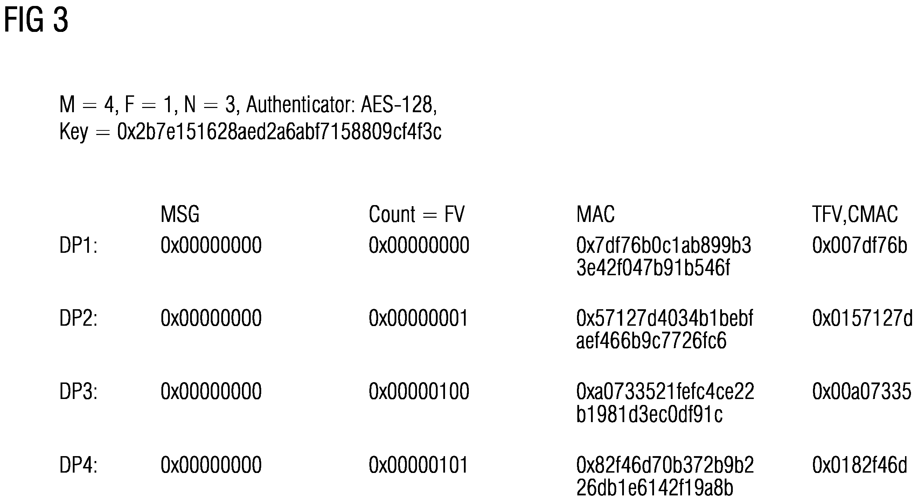

**Fig. 3** zeigt in einer (zur Vereinfachung hier kopierten) Tabelle ein Beispiel eines Standard SecOC Verfahrens mit den folgenden Längen der Teile eines Datenpakets DP1 in Byte: M = 4, F = 1, N = 3,

und mit einem Verschlüsselungsverfahren f (="Authenticator") in Form von AES-128,

sowie mit einem kryptographischen Schlüssel Key = 0x2b7e151628aed2a6abf7158809cf4f3c.

| MSG | Count = FV | MAC | TFV, CMAC |
|---|---|---|---|
| 0x0000000 0 | 0x0000000 **0** | 0x**7df76b**0clab899b33e42f047b91b 546f | 0x**00**7df76 b |
| 0x0000000 0 | 0x0000000 **1** | 0x**57127d**4034b1bebfaef466b9c772 6fc6 | 0x**01**57127 d |
| 0x0000000 0 | 0x000001**0 0** | 0x**a07335**21fefc4ce22b1981d3ec0d f91c | 0x**00**a0733 5 |
| 0x0000000 0 | 0x000001**0 1** | 0x**82f46d**70b372b9b226db1e6142f1 9a8b | 0x**01**82f46 d |

Die übertragene Nachricht MSG ist dabei jeweils "0x00000000"; die Aktualitätswerte (z.B. Zähler der Nummer des abgesendeten Datenpakets DP1, DP2, DP3, DP4) FV und die Nachrichtenauthentisierungscodes (Message Authentication Codes) MAC

und die verkürzten Nachrichtenauthentisierungscodes CMAC sind dabei wie dargestellt.

Das Beispiel in Fig. 3 zeigt für die konstante Nachricht MSG = 0 jeweils verschiedene Werte der verkürzten Nachrichtenauthentisierungscodes CMAC (mit der Länge je N = 3 byte),

die durch die Änderung des Aktualitätswerte (Freshness-Values) FV (Counter oder Zeitstempel) zustande kommen.

Dadurch werden Replay-Angriffe wirksam verhindert, die Authentizität wird durch die Kenntnis des geheimen Schlüssels im sendenden Busteilnehmer und im empfangenden Busteilnehmer sichergestellt. Durch das Abschneiden (truncation) wird nur noch das untere Byte TFV übertragen (wegen F = 1), so dass die Information über die höheren Bytes von FV durch zusätzliche Synchronisation sichergestellt wird.

Als Freshness-Value eignet sich außer einem monotonen Counter auch ein Zeitstempel, der z.B. die globale Zeit codiert, z.B. die Zahl der Sekunden seit dem 01.01.2019. Diese Auflösung wäre für Nachrichten geeignet, die im Sekundenzyklus oder authentisiert werden sollen, der Zeitstempel würde erst nach rund 136 Jahren überlaufen.

Aufgrund der Frequenztoleranzen gängiger Oszillatoren muss auch bei Verwendung von Zeitstempeln hinreichend oft die hinreichende Synchronität der globalen Zeit im Netzwerk durch zusätzliche Kommunikation sichergestellt werden.

Erfindungsgemäße Verfahren und Vorrichtungen zeigen hierzu alternative Vorgehensweisen auf.

Ausführungsbeispiele der Erfindung werden nachfolgend beschrieben.

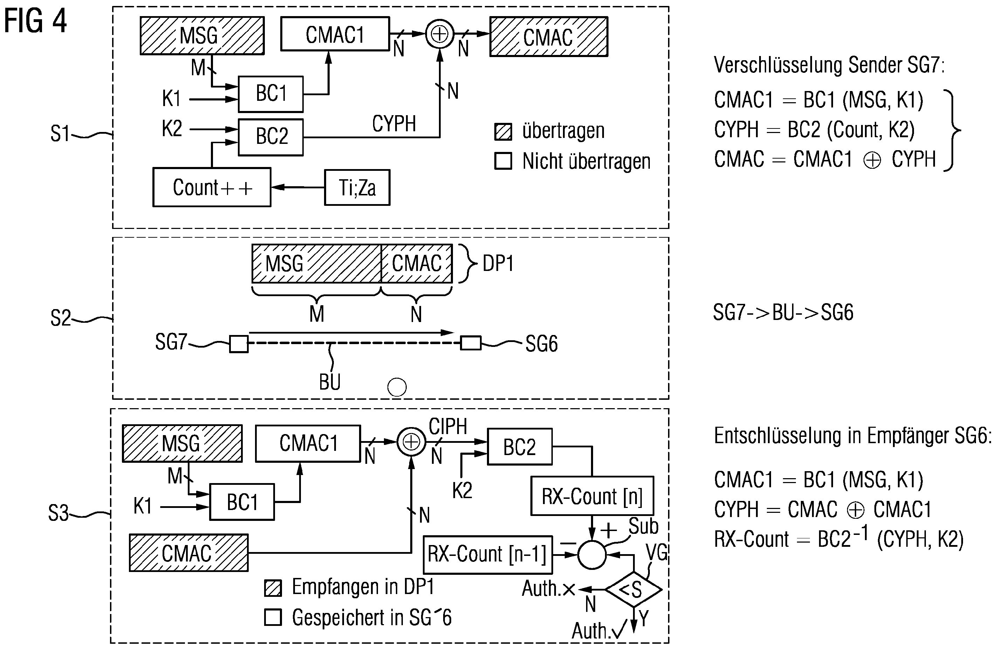

**Fig. 4** zeigt für einige Ausführungsbeispiele der Erfindung,

- wie (im Schritt S1) seitens eines (ein Datenpakets wie z.B. DP1) sendenden Busteilnehmers SG7 vor dem Senden aus der im Datenpaket DP1 aufzunehmenden (Nutzdaten-) Nachricht MSG ein ebenfalls im Datenpaket DP1 aufzunehmender Nachrichtenauthentisierungscode CMAC erzeugt werden kann,
- wie (im Schritt S2) über ein Netzwerk, insbesondere ein (CAN etc) Bus-System BU ein Datenpaket DP1 (enthaltend insbesondere oder nur die Nachricht MSG und den Nachrichtenauthentisierungscode CMAC) von einem (DP1, DP2, DP3, DP4 usw) sendenden Busteilnehmer SG7 an einen (DP1, DP2, DP3, DP4 usw) empfangenden Busteilnehmer SG6 übertragen werden kann,
- wie (im Schritt S3) seitens eines (ein Datenpakets wie z.B. DP1) empfangenden Busteilnehmers SG6 aus der im empfangenen Datenpaket DP1 enthaltenen Nachricht MSG und dem (in DP1 auch enthaltenen)

Nachrichtenauthentisierungscode CMAC eine Authentisierungsprüfung des Datenpaket DP1 erfolgen kann.

Im Schritt **S1** wird seitens eines (ein Datenpakets wie z.B. DP1) sendenden Busteilnehmers SG6 vor dem Senden aus der im Datenpaket DP1 aufzunehmenden (Nutzdaten) Nachricht MSG ein ebenfalls im Datenpaket DP1 aufzunehmender Nachrichtenauthentisierungscode CMAC erzeugt, indem

- aus der Nachricht MSG mit einem in einer ersten Verschlüsselungsvorrichtung BC1 implementierten ersten Verschlüsselungsverfahren (BC1) mittels eines ersten Schlüssels K1 ein verschlüsselter Nachrichtencode CMAC1 erzeugt wird,
- aus einem Zählwert Count++ (insb. einem Zähler gesendeter/empfangener Nachrichten DP1, DP2, DP3, DP4 oder einem Timerwert eines Timers) mit einem in einer zweiten Verschlüsselungsvorrichtung BC2 implementierten zweiten Verschlüsselungsverfahren (BC2) mittels eines zweiten Schlüssels K2 ein verschlüsselter Zählwert CPYH erzeugt wird,
- aus dem verschlüsselten Nachrichtencode CMAC1 und aus dem verschlüsselten Zählwert CPYH durch eine "Exklusiv-Oder" (= X-OR)-Verknüpfung X mit einer (XOR-) Verknüpfungseinrichtung X ein (über das Bus-System BU zu übertragender) Nachrichtenauthentisierungscode CMAC erzeugt wird.

Formeln zur Verdeutlichung der Verschlüsselung (vor dem Senden eines Datenpakets) seitens des sendenden Bus-Teilnehmers SG7 können z.B. folgende sein:

$$CMAC1 = BC1(MSG, K1)$$

$$CYPH = BC2(Count, K2)$$

$$CMAC = CMAC1 \oplus CYPH$$

Eine Ausgestaltung der Erfindung kann Sender-seitig als Verfahren oder Vorrichtung gemäß S1 implementiert sein.

Eine Ausgestaltung der Erfindung kann Empfänger-seitig als Verfahren oder Vorrichtung gemäß S3 implementiert sein.

Eine Ausgestaltung der Erfindung kann auch als Verfahren oder Vorrichtung gemäß S1+S2+S3 kombiniert implementiert sein.

Im Schritt S1 wird also eine Erzeugung eines Replay-festen CMAC im Sender vorgeschlagen. BC1 ist z.B. ein Blockcipher Algorithmus zur Erzeugung eines CMAC1 aus einer Nachricht MSG der Länge M Byte mit einem Schlüssel K1. BC2 ist z.B. ein Blockcipher Algorithmus mit einem Schlüssel K2, einem bei jedem Senden inkrementierenden Counter mit einer Blocklänge N, die z.B. gleich der Länge des CMAC1 ist, also z.B. N = 4, BC1 = AES, BC2 = SIMECK.

Im Schritt **S2** wird über ein Netzwerk, insbesondere ein (CAN etc) Bus-System BU das (eine oder auch mehrere) so erzeugte Datenpaket DP1 (enthaltend insbesondere oder nur die Nachricht MSG und den Nachrichtenauthentisierungscode CMAC) von einem (DP1, DP2, DP3, DP4 usw) sendenden Busteilnehmer SG6 an einen (DP1, DP2, DP3, DP4 usw) empfangenden Busteilnehmer SG6 übertragen.

Im Schritt **S3** kann seitens eines (ein Datenpakets wie z.B. DP1) empfangenden Busteilnehmers SG6 aus der im empfangenen Datenpaket DP1 enthaltenen Nachricht MSG und dem (in DP1 auch enthaltenen) Nachrichtenauthentisierungscode CMAC die Authentisierungsprüfung des Datenpaket DP1 erfolgen mit

- einer weiteren ersten Verschlüsselungseinrichtung BC1 (z.B. der gleichen wie der BC1 beim Sender SG7),
- einer XOR-Verknüpfungseinrichtung X,
- einer Entschlüsselungseinrichtung BC2$^{-1}$ (BC2 hoch minus eins invers zur Verschlüsselungseinrichtung BC2 arbeitend) und
- einer (z.B. einen Schwellwert von z.B. 1 oder 2 oder 3 oder 4 oder 5 oder mehr für eine Zählwert-Differenz RX-Count[n] minus RX-Count[n-1] berücksichtigenden) Vergleichsvorrichtung VG.

Innerhalb des Schrittes 3 wird aus der im (vom empfangenden Bus-Teilnehmer SG6) empfangenen Datenpaket DP1 enthaltenen Nachricht MSG durch die (weitere, z.B. zu BC1 beim Sender gleich arbeitenden) erste Verschlüsselungsvorrichtung BC1 mit dem (geheimen, z.B. unsymmetrischen oder symmetrischen und/oder gleichen wie dem beim Sender SG7 bekannten) Schlüssel K1 ein verschlüsselter Nachrichtencode CMAC1 erzeugt, Aus dem in dem empfangenen Datenpaket DP1 enthaltenen Nachrichtenauthentisierungscode CMAC und dem verschlüsselten Nachrichtencode CMAC1 wird mit einer (XOR-) Verknüpfungseinrichtung X der Zwischenwert CIPH erzeugt.

Aus dem Zwischenwert CIPH wird mit einer Entschlüsselungseinrichtung BC2$^{-1}$ (BC2 hoch minus eins ist z.B. invers zur Verschlüsselungseinrichtung BC2 arbeitend) ein aktueller Empfangsnachrichtenzählwert RX-Count[n] erzeugt(n= Nummer der aktuell empfangenen Nachricht DP1, also n=1 hier), von welchem mit einer Subtraktionseinrichtung Sub ein (für das vor dem Datenpaket DP1 empfangene Datenpaket DP0 entsprechend bestimmter) vorhergehender Empfangsnachrichtenzählwert RX-Count[n-1] (n= Nummer der aktuell empfangenen Nachricht DP1, also aktuell n=1) subtrahiert.

Die Differenz des aktuellen Empfangsnachrichtenzählwerts RX-Count[n] und des vorhergehenden Empfangsnachrichtenzählwerts RX-Count[n-1] wird von einer Vergleichsvorrichtung VG mit eins oder mit einem Schwellwert S verglichen, und falls die Differenz eins bzw. kleiner als der Schwellwert S ist wird das empfangene Datenpaket DP1 als authentisiert definiert,

aber falls die Differenz größer als eins bzw. größer als der Schwellwert S ist wird das empfangene Datenpaket DP1 als nicht authentisiert definiert.

Der Schritt S3 bzw. die Vorrichtungen in Fig. 4 unten zeigen also eine schematische Darstellung zur Authentisierung eines Replay-festen CMAC im Empfänger SG6. BC1 ist z.B. ein Blockcipher Algorithmus zur Erzeugung eines CMAC1 aus einer Nachricht MSG mit dem Schlüssel K1. BC2 ist z.B. ein Blockcipher Algorithmus mit dem Schlüssel K2. Der aktuelle Empfangszähler RX-Count[n] wird z.B. mit dem letzten Empfangswert RX-Count[n-1] auf einen für die Authentisierung akzeptablen Toleranzbereich 0 < RX-Count < S geprüft.

Der Schwellwert S kann z.B. während oder nach dem Neustart, insbesondere Reboot (z.B. des Netzwerks/Bus-Systems BU) auf einen höheren Wert gesetzt werden (z.B. S = 2...5) als im sonstigen Normalbetrieb (z.B. S = 1).

Die Verschlüsselungseinrichtung BC1 und die Verschlüsselungseinrichtung BC2 können insbesondere zueinander unterschiedlich sein oder auch die gleichen sein. Die Verschlüsselungsverfahren BC1, BC2 können insbesondere zueinander unterschiedlich sein oder auch die gleichen sein. Die Schlüssel K1, K2 können insbesondere zueinander unterschiedlich sein oder auch die gleichen sein. Seitens mehrerer oder aller Bus-Teilnehmer (z.B. SG6, SG7) sind zweckmäßig die Verschlüsselungseinrichtung BC1 gleich und die Verschlüsselungseinrichtung BC2 gleich und die Verschlüsselungsverfahren BC1, BC1 gleich und die Schlüssel k1 gleich und die Schlüssel k2 gleich, insbesondere soweit symmetrische Verschlüsselung verwendet wird; falls hingegen unsymmetrische Verschlüsselung verwendet wird sind die Verschlüsselung und Entschlüsselung seitens aller Teilnehmer zweckmäßig zueinander passend.

Formeln zur Verdeutlichung der Verschlüsselung, Entschlüsselung und Authentisierungsprüfung seitens des empfangenden Bus-Teilnehmers SG6 können z.B. folgende sein:

$$CMAC1 = BC1(MSG, K1)$$

$$CYPH = CMAC \oplus CMAC1$$

$$RX\text{-}Count = BC2^{-1}(CYPH, K2)$$

Anstatt des bei der Diskussion eher herkömmlicher Verfahren gemäß Fig. 2-3 verwendeten Bezugszeichens für den Aktualitätswert oder Freshness-Value "FV" wird bei der Beschreibung erfindungsgemäßer Ausführungsbeispiele zur Unterscheidung für den Zählwert das Bezugszeichen "Count++" verwendet.

Z.B. kann ein bei jedem Senden inkrementierenden Zähler (Counter) zur Erzeugung des Zählwerts Count++ verwendet werden, mit z.B. einer Blocklänge N, die gleich der Länge des übertragenen Nachrichtenauthentisierungscodes CMAC1 ist, z.B. N = 4, BC1 = AES, BC2 = SIMECK einen verschlüsselten Zählwertwert CYPH.

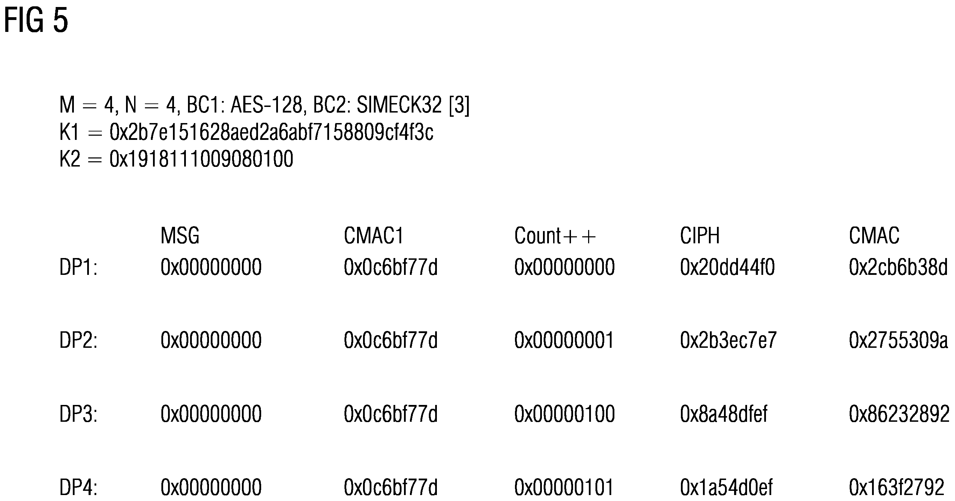

**Fig. 5** zeigt mit einer (zur Vereinfachung hier kopierten) Tabelle ein Beispiel, welche Werte bei Verfahren und/oder Vorrichtungen gemäß einem erfindungsgemäßen Ausführungsbeispiel z.B. gemäß Fig 4 in Datenpaketen DP1, DP2, DP3, DP4 jeweils

die enthaltene Nachricht MSG, der enthaltene Nachrichtenauthentisierungscode CMAC, der (nicht in DP1 enthaltene) verschlüsselte Nachrichtencode CMAC1, der (nicht in DP1 enthaltene) Zählwert Count++ und der (nicht in DP1 enthaltene) Zwischenwert CIPH haben können:

    M = 4, N = 4, BC1: AES-128, BC2: SIMECK32 [3]
    K1 = 0x2b7e151628aed2a6abf7158809cf4f3c
    K2 = 0x1918111009080100

Das

| MSG | CMAC1 | Count | CIPH | CMAC |
|---|---|---|---|---|
| 0x00000000 | 0x0c6bf77d | 0x00000000 | 0x20dd44f0 | 0x2cb6b38d |
| 0x00000000 | 0x0c6bf77d | 0x00000001 | 0x2b3ec7e7 | 0x2755309a |
| 0x00000000 | 0x0c6bf77d | 0x00000100 | 0x8a48dfef | 0x86232892 |
| 0x00000000 | 0x0c6bf77d | 0x00000101 | 0x1a54d0ef | 0x163f2792 |

Beispiel in **Fig. 5** zeigt für eine konstante Nachricht MSG=0 erwartungsgemäß ebenfalls konstante CMAC1 Werte, die jedoch nicht übertragen werden. Es ergeben sich aber verschiedene CMAC Werte, durch die Änderung des Zählerwerts (Count+++) eines Nachrichtenzählers (seitens eines sendenden Bus-Teilnehmers SG7 für von ihm (z.B. seit dem letzten Bus-reset und/oder über den Datenbus etc) gesendete Datenpakete DP1, DP2, DP3, DP4, und/oder seitens eines empfangenden Bus-Teilnehmers SG6 für von ihm (z.B. seit dem letzten Bus-reset und/oder über den Datenbus) empfangene Datenpakete DP1, DP2, DP3, DP4), oder eines Timers.

Die CMAC Werte werden übertragen, dadurch werden Replay-Angriffe wirksam verhindert, die Authentizität wird durch die Kenntnis des geheimen Schlüssels im Sender und im Empfänger sichergestellt. Im Gegensatz zum Beispiel in Fig. 2, 3 mit einem gängigen Verfahren findet hier kein Abschneiden des Zählers (truncation) statt, es ist somit keine zusätzliche Synchronisation notwendig.

Durch die längeren Zähler- und CMAC Werte beim erfindungsgemäßen Verfahren gegenüber dem Standard SecOC Verfahren kann die Sicherheit gegenüber Brute-force Angriffen höher sein. Weiterhin kann im Empfänger eine frei wählbare Toleranz S festgelegt werden, welche eine Toleranz gegenüber Zählerabweichungen beim Hochstarten zulässt, etwa so dass eine Zählerabweichung von größer 1 unmittelbar nach dem Hochstarten zulässig ist.

Ein möglicher weiterer Vorteil ist die mögliche Einsparung von Rechenzeit bei konstanten Nachrichten, was bei Automotive- oder IoT Anwendungen häufig der Fall ist. Der nachrichtenabhängige CMAC1 kann z.B. dann im Voraus berechnet werden, der zählerabhängige Wert CIPH wird z.B. mit einem Lightweight-Blockcipher Verfahren verwendet mit geringeren Laufzeit- und Ressourcen Anforderungen.

Ein üblicher Standard CMAC Algorithmus BC1 ist zur Zeit AES-128, der bei größeren Controllern in Hardware unterstützt wird. Für die verschiedenen µC kommen - abhängig von den verwendeten Netzwerken oder On-ECU-Kommunikation (LIN, CAN, CAN-FD, SPI, I2C) [1] - verschiedene LW Blockcipher Algorithmen in Betracht, beispielhaft können hier Algorithmen der SIMECK Familie [3] verwendet werden:

| µC | M | N | BC1 | BC2 |
|---|---|---|---|---|
| Classic CAN | 4 | 4 | **AES** | **SIMECK32** (4 byte block support) |
| CAN-FD (1) | 8 | 4 | **AES** | **SIMECK64** (8 byte block support) |
| CAN-FD (2) | 60 | 4 | **AES** | **SIMECK64** |

Verwendete Abkürzungen können z.B. folgende Bedeutung haben:

BC     Blockcipher Algorithmus
CAN, CAN-FD Controller Area Network, CAN Flexible Datarate
CMAC    Cryptographic Message Authentication Code
Count     "Freshness"-Counter
CYPH     Ciphertext
HSM     Hardware Security Module
LIN      Lean Information Network
LW      Lightweight
MSG     Message
SecOC    Secure Onboard Communication

**Patentansprüche**

1.  Verfahren zum Erzeugen (K1, K2, BC1, BC2, X) mindestens eines in einem Bus-System (BU) insbesondere eines Kraftfahrzeugs (Kfz) zu übertragenden Datenpakets (DP1, DP2, DP3, DP4),

  wobei (S1) seitens eines das Datenpaket (DP1) sendenden Busteilnehmers (SG7) vor dem Senden des

7

mindestens einen Datenpakets (DP1) mit der im Datenpaket (DP1) aufzunehmenden Nachricht (MSG) durch eine erste Verschlüsselungsvorrichtung (BC1) ein ebenfalls im Datenpaket (DP1) aufzunehmender Nachrichtenauthentisierungscode (CMAC) erzeugt wird,

wobei der Nachrichtenauthentisierungscode (CMAC) erzeugt wird, indem

- aus der Nachricht (MSG) mit einem ersten Verschlüsselungsverfahren (BC1) mittels eines ersten Schlüssels (K1) ein verschlüsselter Nachrichtencode (CMAC1) erzeugt wird, **dadurch gekennzeichnet, dass**
- aus einem Zählwert (Count++) mit einem zweiten Verschlüsselungsverfahren (BC2) mittels eines zweiten Schlüssels (K2) ein verschlüsselter Zählwert (CPYH) erzeugt wird, und
- durch eine Verknüpfung (X) aus dem verschlüsselten Nachrichtencode (CMAC1) und aus dem verschlüsselten Zählwert (CPYH) der zu übertragende Nachrichtenauthentisierungscode (CMAC) erzeugt wird,

wobei aus dem verschlüsselten Nachrichtencode (CMAC1) und aus dem verschlüsselten Zählwert (CPYH) durch eine logische "Exklusiv-Oder" Verknüpfung (X) der zu übertragende Nachrichtenauthentisierungscode (CMAC) erzeugt wird.

2. Verfahren nach Anspruch 1,

   **dadurch gekennzeichnet, dass**
   der Zählwert (Count++) entweder ein mit einem Zähler (Za) erzeugter Wert ist, der die Anzahl bisher über das Bus-System (BU) insbesondere seit dem letzten Neustart des Bus-Systems (BU) gesendeter und/oder empfangener Nachrichten (DP1, DP2, DP3, DP4) repräsentiert,
   oder ein insbesondere seitens mehrerer oder aller Bus-Teilnehmer (SG1..SG10) zur Verfügung stehender Timerwert mindestens eines Timers (Ti) ist.

3. Verfahren zur Authentisierungsprüfung (K1, K2, BC1, X, BC2$^{-1}$ , Sub, VG) mindestens eines über ein Bus-System (BU) insbesondere eines Kraftfahrzeugs (Kfz) empfangenen Datenpakets (DP1, DP2, DP3, DP4), insbesondere eines Datenpakets (DP1, DP2, DP3, DP4), das zuvor nach einem der vorhergehenden Ansprüche erzeugt (SG7) wurde,

   wobei (S3) seitens eines mindestens ein Datenpaket (DP1) empfangenden Busteilnehmers (SG6)

   - aus der im empfangenen Datenpaket (DP1) enthaltenen Nachricht (MSG) mit einem ersten Verschlüsselungsverfahren (BC1) mittels eines ersten Schlüssels (K1) ein verschlüsselter Nachrichtencode (CMAC1) erzeugt wird,
   - aus dem im empfangenen Datenpaket (DP1) auch enthaltenen übertragenen Nachrichtenauthentisierungscode (CMAC) und aus dem erzeugten verschlüsselten Nachrichtencode (CMAC1) mit einer Verknüpfungseinrichtung (X) ein Zwischenwert (CIPH) erzeugt wird, **dadurch gekennzeichnet, dass**
   - aus dem Zwischenwert (CIPH) mit einer Entschlüsselungseinrichtung (BC2$^{-1}$) durch eine Entschlüsselung (BC2$^{-1}$) ein aktueller Empfangsnachrichtenzählwert (RX-Count[n]) erzeugt wird,
   - aus dem aktuellen Empfangsnachrichtenzählwert (RX-Count[n]) mit einem für ein vor dem Datenpaket (DP1) empfangenes Datenpaket (DP0) bestimmten vorhergehenden Empfangsnachrichtenzählwert (RX-Count[n-1]) verglichen (VG; S) wird,
   - in Abhängigkeit von der Differenz des aktuellen Empfangsnachrichtenzählwerts (RX-Count[n]) zum vorhergehenden Empfangsnachrichtenzählwert (RX-Count[n-1]) das empfangene Datenpaket (DP1) als authentisiert oder als nicht authentisiert definiert wird,

   wobei aus dem verschlüsselten Nachrichtencode (CMAC1) und aus dem verschlüsselten Zählwert (CPYH) durch eine logische "Exklusiv-Oder" Verknüpfung (X) der zu übertragende Nachrichtenauthentisierungscode (CMAC) erzeugt wurde.

4. Verfahren nach dem vorhergehenden Anspruch,

   wobei in Abhängigkeit von der Differenz des aktuellen Empfangsnachrichtenzählwerts (RX-Count[n]) zum vorhergehenden Empfangsnachrichtenzählwert (RX-Count[n-1]) das empfangene Datenpaket (DP1) als authentisiert oder als nicht authentisiert definiert wird,
   indem nur falls die Differenz größer als eins oder größer als ein Schwellwert (S) ist das empfangene Datenpaket DP1 als nicht authentisiert betrachtet wird, wobei der Schwellwert (S) vorzugsweise nach einem Neustart des Bus-Systems (BU) auf einen höheren Wert ge-setzt wird (S = 2...5) als im sonstigen Normalbetrieb (S=0; S = 1).

5. Verfahren nach einem der beiden vorhergehenden Ansprüche,
wobei durch eine logische Exklusiv-Oder-Verknüpfung (X) aus dem im empfangenen Datenpaket (DP1) auch enthaltenen übertragenen Nachrichtenauthentisierungscode (CMAC) und aus dem erzeugten verschlüsselten Nachrichtencode (CMAC1) mit einer Verknüpfungseinrichtung (X) ein Zwischenwert (CIPH) erzeugt wird.

6. Verfahren nach einem der vorhergehenden Ansprüche,
**dadurch gekennzeichnet, dass**
seitens mehrerer Bus-Teilnehmer (SG1..SG10) des Bus-Systems (BU), insbesondere seitens eines ein Datenpaket (DP1) empfangenden Busteilnehmers (SG6) und eines ein Datenpaket (DP1) sendenden Busteilnehmers (SG7), das gleiche erste Verschlüsselungsverfahren (BC1) und/oder der gleiche erste Schlüssel (K1) und/oder das gleiche zweite Verschlüsselungsverfahren (BC2) und/oder der gleiche zweite Schlüssel (K2) verwendet wird.

7. Verfahren nach einem der vorhergehenden Ansprüche, **dadurch gekennzeichnet, dass** seitens mehrerer Bus-Teilnehmer (SG1..SG10) des Bus-Systems (BU), insbesondere seitens eines ein Datenpaket (DP1) empfangenden Busteilnehmers (SG6) und eines ein Datenpaket (DP1) sendenden Busteilnehmers (SG7), der zweite Schlüssel (K2) aus dem Ergebnis CMAC1 des ersten Verschlüsselungsverfahrens (BC1) abgeleitet wird.

8. Verfahren nach Anspruch 1 oder 2-6, **dadurch gekennzeichnet, dass** ein Timerwert (Count++) der eine Zeitinformation bez. der globalen Zeit repräsentiert, im Netzwerk sicher (authentisch, vertraulich) von einem Teilnehmer (z.B. SG7) an alle anderen Teilnehmer (SG1..SG10) verteilt wird.

9. Vorrichtung, umfassend eine erste Verschlüsselungsvorrichtung (BC1), eine zweite Verschlüsselungsvorrichtung (BC2), und eine Verknüpfungseinrichtung (X),

insbesondere zur Durchführung des Verfahrens nach einem der vorhergehenden Ansprüche,
zum Erzeugen (K1, K2, BC1, BC2, X) mindestens eines in einem Bus-System (BU) insbesondere eines Kraftfahrzeugs (Kfz) zu übertragenden Datenpakets (DP1, DP2, DP3, DP4),
wobei eine erste Verschlüsselungsvorrichtung (BC1) seitens eines das Datenpaket (DP1) sendenden Busteilnehmers (SG7) vorgesehen ist, die dazu ausgebildet ist,
vor dem Senden des mindestens einen Datenpakets (DP1) aus der im Datenpaket (DP1) aufzunehmenden Nachricht (MSG) einen ebenfalls im zu übertragender Datenpaket (DP1) aufzunehmenden Nachrichtenauthentisierungscode (CMAC) zu erzeugen,
wobei dafür seitens des sendenden Busteilnehmers (SG7):

- die erste Verschlüsselungsvorrichtung (BC1) dazu ausgebildet ist, aus der Nachricht (MSG) mit einem ersten Verschlüsselungsverfahren (BC1) mittels eines ersten Schlüssels (K1) einen verschlüsselten Nachrichtencode (CMAC1) zu erzeugen, **dadurch gekennzeichnet, dass**
- eine zweiten Verschlüsselungsvorrichtung (BC2) dazu ausgebildet ist, aus einem Zählwert (Count++) mit einem zweiten Verschlüsselungsverfahren (BC2) mittels eines zweiten Schlüssels (K2) einen verschlüsselten Zählwert (CPYH) zu erzeugen, und
- eine Verknüpfungseinrichtung (X) dazu ausgebildet ist, aus dem verschlüsselten Nachrichtencode (CMAC1) und aus dem verschlüsselten Zählwert (CPYH) durch eine Verknüpfung (X) den

Nachrichtenauthentisierungscode (CMAC) zu erzeugen,
wobei aus dem verschlüsselten Nachrichtencode (CMAC1) und aus dem verschlüsselten Zählwert (CPYH) durch eine logische "Exklusiv-Oder" Verknüpfung (X) der zu übertragende Nachrichtenauthentisierungscode (CMAC) erzeugt wird.

10. Vorrichtung, umfassend eine erste Verschlüsselungsvorrichtung (BC1), eine zweite Verschlüsselungsvorrichtung (BC2), und eine Verknüpfungseinrichtung (X),

insbesondere nach dem vorhergehenden Anspruch und insbesondere zur Durchführung des Verfahrens nach einem der vorhergehenden Verfahrens-Ansprüche,
zur Authentisierungsprüfung (k1, k2, BC1, X, BC2$^{-1}$, Sub, VG) mindestens eines über ein Bus-System (BU) insbesondere eines Kraftfahrzeugs (Kfz) erhaltenen Datenpakets (DP1, DP2, DP3, DP4),

wobei (S1) seitens eines mindestens das Datenpaket (DP1) empfangenden Busteilnehmers (SG6)

- eine erste Verschlüsselungsvorrichtung (BC1) dazu ausgebildet ist, aus der im empfangenen Datenpaket (DP1) enthaltenen Nachricht (MSG) mit einem ersten Verschlüsselungsverfahren (BC1) mittels eines ersten Schlüssels (K1) einen verschlüsselten Nachrichtencode (CMAC1) zu erzeugen,
- eine Verknüpfungseinrichtung (X) dazu ausgebildet ist, aus dem erzeugten verschlüsselten Nachrichtencode (CMAC1) und aus dem in der empfangenen Datenpaket (DP1) enthaltenen Nachrichtenauthentisierungscode (CMAC) einen Zwischenwert (CIPH) zu erzeugen, **dadurch gekennzeichnet, dass**
- eine Entschlüsselungseinrichtung (BC2$^{-1}$) dazu ausgebildet ist, aus dem Zwischenwert (CIPH) einen aktuellen Empfangsnachrichtenzählwert (RX-Count[n]) für das aktuelle Datenpaket (DG1) zu bestimmen,
- eine Vergleichsvorrichtung (VG) dazu ausgebildet ist,

in Abhängigkeit von der Differenz (Sub) des aktuellen Empfangsnachrichtenzählwerts (RX-Count[n]) und eines für ein vor dem Datenpaket (DP1) empfangenes Datenpaket (DP0) bestimmten vorhergehenden Empfangsnachrichtenzählwerts (RX-Count[n-1]) das empfangene Datenpaket (DP1) als authentisiert oder als nicht authentisiert zu definieren.

11. Vorrichtung nach einem der beiden vorhergehenden Ansprüche, **dadurch gekennzeichnet, dass**
das Bus-System ein CAN-Bus oder ein CAN-FD Bus oder ein LIN-Bus oder ein SPI Bus oder ein I2C Bus ist, und/oder für eine Kommunikation zwischen ECUs vorgesehen ist.

**Claims**

1. Method for generating (K1, K2, BC1, BC2, X) at least one data packet (DP1, DP2, DP3, DP4) to be transmitted in a bus system (BU), in particular of a motor vehicle (Kfz),

wherein (S1) before transmitting the at least one data packet (DP1) containing the message (MSG) to be included in the data packet (DP1) a bus subscriber (SG7) transmitting the data packet (DP1) uses a first encryption apparatus (BC1) to generate a message authentication code (CMAC) that is likewise to be included in the data packet (DP1),
the message authentication code (CMAC) being generated by

- using a first encryption method (BC1) to generate an encrypted message code (CMAC1) from the message (MSG) by means of a first key (K1), **characterized in that**
- a second encryption method (BC2) is used to generate an encrypted count (CYPH) from a count (Count++) by means of a second key (K2), and
- a logic operation (X) is used to generate the message authentication code (CMAC) to be transmitted from the encrypted message code (CMAC1) and from the encrypted count (CYPH),

wherein the message authentication code (CMAC) to be transmitted is generated from the encrypted message code (CMAC1) and from the encrypted count (CYPH) by way of a logic "Exclusive-Or" operation (X).

2. Method according to Claim 1,
**characterized in that**

the count (Count++) is either a value, generated using a counter (Za), that represents the number of messages (DP1, DP2, DP3, DP4) transmitted and/or received via the bus system (BU) hitherto, in particular since the last restart of the bus system (BU),
or a timer value, of at least one timer (Ti), that is available in particular on multiple or all bus subscribers (SG1..SG10).

3. Method for authentication checking (K1, K2, BC1, X, BC2$^{-1}$, Sub, VG) at least one data packet (DP1, DP2, DP3, DP4) received via a bus system (BU), in particular of a motor vehicle (Kfz),

in particular a data packet (DP1, DP2, DP3, DP4) that was previously generated (SG7) according to one of the preceding claims,
wherein (S3) a bus subscriber (SG6) receiving at least one data packet (DP1)

- uses a first encryption method (BC1) to generate an encrypted message code (CMAC1) from the message (MSG) contained in the received data packet (DP1) by means of a first key (K1),
- generates an intermediate value (CIPH) from the transmitted message authentication code (CMAC) also contained in the received data packet (DP1) and from the generated encrypted message code (CMAC1) using a logic device (X), **characterized in that**
- a decryption device (BC2$^{-1}$) is used to generate a current received message count (RX-Count [n]) from the intermediate value (CIPH) by way of a decryption (BC2$^{-1}$),
- the current received message count (RX-Count [n]) is compared (VG; S) with a preceding received message count (RX-Count [n-1]) determined for a data packet (DP0) received before the data packet (DP1),
- the difference between the current received message count (RX-Count [n]) and the preceding received message count (RX-Count [n-1]) is taken as a basis for defining the received data packet (DP1) as authenticated or as unauthenticated, wherein the message authentication code (CMAC) to be transmitted was generated from the encrypted message code (CMAC1) and from the encrypted count (CYPH) by way of a logic "Exclusive-Or" operation (X).

4. Method according to the preceding claim,

   wherein the difference between the current received message count (RX-Count [n]) and the preceding received message count (RX-Count [n-1]) is taken as a basis for defining the received data packet (DP1) as authenticated or as unauthenticated
   by regarding the received data packet DP1 as unauthenticated only if the difference is greater than one or greater than a threshold value (S),
   the threshold value (S) preferably being set to a higher value (S = 2 ... 5) after a restart of the bus system (BU) than in other normal operation (S = 0; S = 1).

5. Method according to either of the two preceding claims,

   wherein a logic Exclusive-Or operation (X)
   is used to generate an intermediate value (CIPH) from the transmitted message authentication code (CMAC) also contained in the received data packet (DP1) and from the generated encrypted message code (CMAC1) using a logic device (X).

6. Method according to one of the preceding claims,
   **characterized in that**
   multiple bus subscribers (SG1..SG10) of the bus system (BU), in particular a bus subscriber (SG6) receiving a data packet (DP1) and a bus subscriber (SG7) transmitting a data packet (DP1), use the same first encryption method (BC1) and/or the same first key (K1) and/or the same second encryption method (BC2) and/or the same second key (K2).

7. Method according to one of the preceding claims, **characterized in that** multiple bus subscribers (SG1..SG10) of the bus system (BU), in particular a bus subscriber (SG6) receiving a data packet (DP1) and a bus subscriber (SG7) transmitting a data packet (DP1), derive the second key (K2) from the result CMAC1 of the first encryption method (BC1).

8. Method according to Claim 1 or 2-6, **characterized in that** a timer value (Count++) representing time information relating to the global time is securely (authentically, confidentially) distributed in the network from one subscriber (e.g. SG7) to all other subscribers (SG1..SG10).

9. Apparatus comprising a first encryption apparatus (BC1), a second encryption apparatus (BC2), and a logic device (X),

   in particular for carrying out the method according to one of the preceding claims, for generating (K1, K2, BC1, BC2, X) at least one data packet (DP1, DP2, DP3, DP4) to be transmitted in a bus system (BU), in particular of a motor vehicle (Kfz),
   wherein a first encryption apparatus (BC1) is provided by a bus subscriber (SG7) transmitting the data packet (DP1) and is designed so as,
   before transmitting the at least one data packet (DP1), to generate from the message (MSG) to be included in the data packet (DP1) a message authentication code (CMAC) that is likewise to be included in the data packet (DP1) to be transmitted,

wherein, for this purpose, on the transmitting bus subscriber (SG7):

- the first encryption apparatus (BC1) is designed to use a first encryption method (BC1) to generate an encrypted message code (CMAC1) from the message (MSG) by means of a first key (K1), **characterized in that**
- a second encryption apparatus (BC2) is designed to use a second encryption method (BC2) to generate an encrypted count (CYPH) from a count (Count++) by means of a second key (K2), and
- a logic device (X) is designed to generate the message authentication code (CMAC) from the encrypted message code (CMAC1) and from the encrypted count (CYPH) by way of a logic operation (X),

wherein the message authentication code (CMAC) to be transmitted is generated from the encrypted message code (CMAC1) and from the encrypted count (CYPH) by way of a logic "Exclusive-Or" operation (X).

10. Apparatus comprising a first encryption apparatus (BC1), a second encryption apparatus (BC2), and a logic device (X),

in particular according to the preceding claim and in particular for carrying out the method according to one of the preceding method claims,

for authentication checking (k1, k2, BC1, X, BC2$^{-1}$, Sub, VG) at least one data packet (DP1, DP2, DP3, DP4) obtained via a bus system (BU), in particular of a motor vehicle (Kfz),

wherein (S1) on a bus subscriber (SG6) receiving at least the data packet (DP1)

- a first encryption apparatus (BC1) is designed to use a first encryption method (BC1) to generate an encrypted message code (CMAC1) from the message (MSG) contained in the received data packet (DP1) by means of a first key (K1),
- a logic device (X) is designed to generate an intermediate value (CIPH) from the generated encrypted message code (CMAC1) and from the message authentication code (CMAC) contained in the received data packet (DP1), **characterized in that**
- a decryption device (BC2$^{-1}$) is designed to determine a current received message count (RX-Count [n]) for the current data packet (DG1) from the intermediate value (CIPH),
- a comparison apparatus (VG) is designed to

take the difference (Sub) between the current received message count (RX-Count [n]) and a preceding received message count (RX-Count [n-1]) determined for a data packet (DP0) received before the data packet (DP1) as a basis for defining the received data packet (DP1) as authenticated or as unauthenticated.

11. Apparatus according to either of the two preceding claims, **characterized in that** the bus system is a CAN bus or a CAN FD bus or a LIN bus or an SPI bus or an I2C bus and/or is provided for communication between ECUs.

**Revendications**

1. Procédé pour générer (K1, K2, BC1, BC2, X) au moins un paquet de données (DP1, DP2, DP3, DP4) à transmettre dans un système de bus (BU), en particulier d'un véhicule à moteur (Kfz),

dans lequel, (S1) du côté d'un participant au bus (SG7) émettant le paquet de données (DP1), avant l'émission du ou des paquets de données (DP1), un code d'authentification de message (CMAC) à inclure dans le paquet de données (DP1) est généré à partir du message (MSG) à inclure également dans le paquet de données (DP1) par un premier dispositif de chiffrement (BC1),

le code d'authentification de message (CMAC) étant généré par le fait que :

- un code de message chiffré (CMAC1) est généré à partir du message (MSG) par un premier procédé de chiffrement (BC1) au moyen d'une première clé (K1), **caractérisé en ce que**
- une valeur de comptage chiffrée (CPYH) est générée à partir d'une valeur de comptage (Count++) par un second procédé de chiffrement (BC2) au moyen d'une seconde clé (K2), et
- le code d'authentification de message (CMAC) à transmettre est généré par une combinaison (X) du code de message chiffré (CMAC1) et de la valeur de comptage chiffrée (CPYH),

le code d'authentification de message (CMAC) à transmettre étant généré à partir du code de message chiffré (CMAC1) et de la valeur de comptage chiffrée (CPYH) par une combinaison logique "OU exclusif" (X).

2. Procédé selon la revendication 1,
   **caractérisé en ce que**

   la valeur de comptage (Count++) est soit une valeur générée au moyen d'un compteur (Za) qui représente le nombre de messages (DP1, DP2, DP3, DP4) envoyés et/ou reçus jusqu'à présent par l'intermédiaire du système de bus (BU), en particulier depuis le dernier redémarrage du système de bus (BU),
   soit une valeur de temporisateur d'au moins un temporisateur (Ti), disponible en particulier du côté de plusieurs ou de tous les participants au bus (SG1..SG10).

3. Procédé pour vérifier l'authenticité (K1, K2, BC1, X, $BC2^{-1}$, Sub, VG) d'au moins un paquet de données (DP1, DP2, DP3, DP4) reçu par l'intermédiaire d'un système de bus (BU), en particulier d'un véhicule à moteur (Kfz),

   en particulier d'un paquet de données (DP1, DP2, DP3, DP4) qui a été généré (SG7) selon l'une des revendications précédentes,
   dans lequel, (S3) du côté d'un participant au bus (SG6) recevant au moins un paquet de données (DP1),

   - un code de message chiffré (CMAC1) est généré à partir du message (MSG) contenu dans le paquet de données reçu (DP1) par un premier procédé de chiffrement (BC1) au moyen d'une première clé (K1),
   - une valeur intermédiaire (CIPH) est générée au moyen d'un dispositif de combinaison (X) à partir du code d'authentification de message transmis (CMAC) également contenu dans le paquet de données reçu (DP1) et à partir du code de message chiffré généré (CMAC1), **caractérisé en ce que**
   - une valeur de comptage de messages reçus actuelle (RX-Count[n]) est générée au moyen d'un dispositif de déchiffrement ($BC2^{-1}$) à partir de la valeur intermédiaire (CIPH) par un déchiffrement ($BC2^{-1}$),
   - la valeur de comptage de messages reçus actuelle (RX-Count[n]) est comparée (VG ; S) à une valeur de comptage de messages reçus précédente (RX-Count[n-1]) déterminée pour un paquet de données (DP0) reçu avant le paquet de données (DP1),
   - en fonction de la différence entre la valeur de comptage de messages reçus actuelle (RX-Count[n]) et la valeur de comptage de messages reçus précédente (RX-Count[n-1]), le paquet de données reçu (DP1) est défini comme étant authentifié ou non authentifié,

   le code d'authentification de message (CMAC) à transmettre ayant été généré à partir du code de message chiffré (CMAC1) et de la valeur de comptage chiffrée (CPYH) par une combinaison logique "OU exclusif" (X).

4. Procédé selon la revendication précédente,

   - dans lequel, en fonction de la différence entre la valeur de comptage de messages reçus actuelle (RX-Count[n]) et la valeur de comptage de messages reçus précédente (RX-Count[n-1]), le paquet de données reçu (DP1) est défini comme étant authentifié ou non authentifié,

   le paquet de données reçu (DP1) n'étant considéré comme étant non authentifié que si la différence est supérieure à un ou supérieure à une valeur de seuil (S),
   la valeur de seuil (S) étant de préférence réglée (S = 2...5) à une valeur plus élevée, après un redémarrage du système de bus (BU), que lors du fonctionnement normal (S=0 ; S=1).

5. Procédé selon l'une des deux revendications précédentes,
   dans lequel, par une combinaison logique OU exclusif (X)

   - une valeur intermédiaire (CIPH) est générée à l'aide d'un dispositif de combinaison (X) à partir du code d'authentification de message transmis (CMAC) également contenu dans le paquet de données reçu (DP1) et à partir du code de message chiffré généré (CMAC1).

6. Procédé selon l'une quelconque des revendications précédentes, **caractérisé en ce que**,
   du côté de plusieurs participants au bus (SG1..SG10) du système de bus (BU), en particulier du côté d'un participant au bus (SG6) recevant un paquet de données (DP1) et d'un participant au bus (SG7) émettant un paquet de données (DP1), le même premier procédé de chiffrement (BC1) et/ou la même première clé (K1) et/ou le même second procédé de chiffrement (BC2) et/ou la même seconde clé (K2) sont utilisés.

7. Procédé selon l'une quelconque des revendications précédentes, **caractérisé en ce que**, du côté de plusieurs participants au bus (SG1..SG10) du système de bus (BU), en particulier du côté d'un participant au bus (SG6) recevant un paquet de données (DP1) et d'un participant au bus (SG7) émettant un paquet de données (DP1), la seconde clé (K2) est déduite du résultat CMAC1 du premier procédé de chiffrement (BC1).

8. Procédé selon la revendication 1 ou 2-6, **caractérisé en ce qu'**une valeur de temporisateur (Count++) qui représente une information temporelle par rapport au temps global est distribuée de manière sécurisée (authentifiée, confidentielle) dans le réseau par un participant (par exemple SG7) à tous les autres participants (SG1..SG10).

9. Dispositif comprenant un premier dispositif de chiffrement (BC1), un second dispositif de chiffrement (BC2), et un dispositif de combinaison (X),

en particulier pour la mise en œuvre du procédé selon l'une quelconque des revendications précédentes,
pour générer (K1, K2, BC1, BC2, X) au moins un paquet de données (DP1, DP2, DP3, DP4) à transmettre dans un système de bus (BU), en particulier d'un véhicule à moteur (Kfz),
dans lequel un premier dispositif de chiffrement (BC1) est prévu du côté d'un participant au bus (SG7) émettant le paquet de données (DP1), lequel est conçu pour,
avant l'émission du ou des paquets de données (DP1), générer à partir du message (MSG) à inclure dans le paquet de données (DP1) un code d'authentification de message (CMAC) également à inclure dans le paquet de données (DP1) à transmettre,
dans lequel, à cet effet, du côté du participant au bus émetteur (SG7) :

- le premier dispositif de chiffrement (BC1) est conçu pour générer un code de message chiffré (CMAC1) à partir du message (MSG) par un premier procédé de chiffrement (BC1) au moyen d'une première clé (K1), **caractérisé en ce que**
- un second dispositif de chiffrement (BC2) est conçu pour générer une valeur de comptage chiffrée (CPYH) à partir d'une valeur de comptage (Count++) par un second procédé de chiffrement (BC2) au moyen d'une seconde clé (K2), et
- un dispositif de combinaison (X) est conçu pour générer le code d'authentification de message (CMAC) à partir du code de message chiffré (CMAC1) et de la valeur de comptage chiffrée (CPYH) par une combinaison (X), le code d'authentification de message (CMAC) à transmettre étant généré à partir du code de message chiffré (CMAC1) et de la valeur de comptage chiffrée (CPYH) par une combinaison logique "OU exclusif" (X).

10. Dispositif comprenant un premier dispositif de chiffrement (BC1), un second dispositif de chiffrement (BC2), et un dispositif de combinaison (X),

en particulier selon la revendication précédente et en particulier pour la mise en œuvre du procédé selon l'une quelconque des revendications de procédé précédentes,
pour la vérification de l'authenticité (k1, k2, BC1, X, BC2$^{-1}$, Sub, VG) d'au moins un paquet de données (DP1, DP2, DP3, DP4) reçu par l'intermédiaire d'un système de bus (BU), en particulier d'un véhicule à moteur (Kfz),
dans lequel, (S1) du côté d'un participant au bus (SG6) recevant ledit au moins un paquet de données (DP1),

- un premier dispositif de chiffrement (BC1) est conçu pour générer un code de message chiffré (CMAC1) à partir du message (MSG) contenu dans le paquet de données reçu (DP1) par un premier procédé de chiffrement (BC1) au moyen d'une première clé (K1),
- un dispositif de combinaison (X) est conçu pour générer une valeur intermédiaire (CIPH) à partir du code de message chiffré généré (CMAC1) et à partir du code d'authentification de message (CMAC) contenu dans le paquet de données reçu (DP1), **caractérisé en ce que**
- un dispositif de déchiffrement (BC2$^{-1}$) est conçu pour déterminer une valeur de comptage de messages reçus actuelle (RX-Count[n]) pour le paquet de données actuel (DG1) à partir de la valeur intermédiaire (CIPH),
- un dispositif de comparaison (VG) est conçu pour,

en fonction de la différence (Sub) entre la valeur de comptage de messages reçus actuelle (RX-Count[n]) et une valeur de comptage de messages reçus précédente (RX-Count[n-1]) déterminée pour un paquet de données (DP0) reçu avant le paquet de données (DP1), définir le paquet de données reçu (DP1) comme étant authentifié ou non authentifié.

11. Procédé selon l'une quelconque des revendications précédentes,
   **caractérisé en ce que**
   le système de bus est un bus CAN ou un bus CAN-FD ou un bus LIN ou un bus SPI ou un bus I2C, et/ou est prévu pour une communication entre des ECU.

# FIG 1

FIG 2

☐ Nicht übertragen

| FV | MAC = f (MSG, FV, Key) |
|---|---|

Trunc     Trunc

| Nachricht MSG | TFV | CMAC |
|---|---|---|

⟍ M ⟍    ⟍ F ⟍    ⟍ N ⟍

☒ Übertragen (DP1)

⟍ DP1 ⟍

# FIG 3

M = 4, F = 1, N = 3, Authenticator: AES-128,
Key = 0x2b7e151628aed2a6abf7158809cf4f3c

|  | MSG | Count = FV | MAC | TFV,CMAC |
|---|---|---|---|---|
| DP1: | 0x00000000 | 0x00000000 | 0x7df76b0c1ab899b3 3e42f047b91b546f | 0x007df76b |
| DP2: | 0x00000000 | 0x00000001 | 0x57127d4034b1bebf aef466b9c7726fc6 | 0x0157127d |
| DP3: | 0x00000000 | 0x00000100 | 0xa0733521fefc4ce22 b1981d3ec0df91c | 0x00a07335 |
| DP4: | 0x00000000 | 0x00000101 | 0x82f46d70b372b9b2 26db1e6142f19a8b | 0x0182f46d |

# FIG 4

Verschlüsselung Sender SG7:

$CMAC1 = BC1\ (MSG, K1)$
$CYPH = BC2\ (Count, K2)$
$CMAC = CMAC1 \oplus CYPH$

SG7 -> BU -> SG6

Entschlüsselung in Empfänger SG6:

$CMAC1 = BC1\ (MSG, K1)$
$CYPH = CMAC \oplus CMAC1$
$RX\text{-}Count = BC2^{-1}\ (CYPH, K2)$

# FIG 5

M = 4, N = 4, BC1: AES-128, BC2: SIMECK32 [3]
K1 = 0x2b7e151628aed2a6abf7158809cf4f3c
K2 = 0x1918111009080100

| | MSG | CMAC1 | Count++ | CIPH | CMAC |
|---|---|---|---|---|---|
| DP1: | 0x00000000 | 0x0c6bf77d | 0x00000000 | 0x20dd44f0 | 0x2cb6b38d |
| DP2: | 0x00000000 | 0x0c6bf77d | 0x00000001 | 0x2b3ec7e7 | 0x2755309a |
| DP3: | 0x00000000 | 0x0c6bf77d | 0x00000100 | 0x8a48dfef | 0x86232892 |
| DP4: | 0x00000000 | 0x0c6bf77d | 0x00000101 | 0x1a54d0ef | 0x163f2792 |

EP 3 949 263 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017125826 A1
- EP 3432511 A1
- DE 102014113111 A1
- DE 102015015361 A1

**In der Beschreibung aufgeführte Nicht-Patentliteratur**

- **W. ZIMMERMANN**. *R. Schmidgal Bussysteme in der Fahrzeugtechnik*, 2011, vol. 4
- *AUTOSAR Specification of Secure Onboard Communication*, www.autosar.com
- The SIMECK Family of Block Ciphers. **YANG, G.** ; **ZHU, B.** ; **SUDER, V.** ; **AAGAARD, M.D.** ; **GONG, G**. Cryptographic Hardware and Embedded Systems-CHES 2011. Springer Berlin Heidelberg, 2015, 342-357